# EUROPÄISCHE PATENTSCHRIFT

(11) **EP 2 412 486 B1**
(45) Veröffentlichungstag und Bekanntmachung des Hinweises auf die Patenterteilung: **26.10.2016**
(21) Anmeldenummer: 11005284.2
(22) Anmeldetag: 29.06.2011
(51) Int. Cl.: B25F 5/00, B23D 59/00, B24B 27/08, B27G 19/04, B27B 9/02, B27B 9/04, B28D 7/02

(54) **Führungseinrichtung und damit ausgestattete Hand-Werkzeugmaschine**
Guiding device and hand power tool with the same
Dispositif de guidage et machine-outil manuelle en étant équipée

(30) Priorität: 31.07.2010 DE 102010032987; 15.10.2010 DE 102010048424
(43) Veröffentlichungstag der Anmeldung: 01.02.2012
(73) Patentinhaber: Festool GmbH, 73240 Wendlingen am Neckar (DE)
(72) Erfinder: Vesely, Zbynek, 47001 Ceska Lipa (CZ); Blazek, Jiri, 47158 Cvikov-Lindava (CZ)
(74) Vertreter: Patentanwälte Bregenzer und Reule Partnerschaftsgesellschaft mbB

(56) Entgegenhaltungen:
- WO-A1-2004/060621
- WO-A1-2009/011454
- DE-A1- 3 344 732
- DE-A1-102007 030 639
- DE-U1- 29 902 365
- GB-A- 783 112
- GB-A- 840 422
- GB-A- 2 182 280
- JP-A- 2001 030 232
- JP-U- H0 179 518
- US-A- 2 676 624
- US-A- 4 253 362
- US-A- 5 084 972
- US-A- 5 758 998
- US-A- 5 941 227
- US-A1- 2004 129 261
- US-A1- 2008 163 492

## Beschreibung

Die Erfindung betrifft eine mit ihrer Unterseite auf einem Untergrund führbaren, z.B. auflegbaren, Führungseinrichtung, die insbesondere eine Führungsplatte aufweist, gemäß dem Oberbegriff des Patentanspruchs 1 und eine mit einer solchen Führungseinrichtung ausgestattete Hand-Werkzeugmaschine.

Eine derartige Führungseinrichtung ist beispielsweise in DE 33 44 732 A1 erläutert.

Die Führungseinrichtung umfasst beispielsweise eine Führungsplatte, mit der die Hand-Werkzeugmaschine, beispielsweise eine Tauchsäge eine Mauerschlitzfräse oder dergleichen, auf einem Untergrund geführt werden kann, insbesondere entlang einer Führungsschiene, aber auch direkt auf einem Werkstück. Beispielsweise ist die Führungseinrichtung auf den Untergrund auflegbar.

Die Gleiteigenschaften der Führungsschiene und der Führungseinrichtung sind in der Regel so aufeinander abgestimmt, dass die Führungseinrichtung und somit die mit ihr ausgestattete Hand-Werkzeugmaschine mit noch akzeptablem Reibwiderstand aneinander gleitfähig sind, d.h. dass man die Hand-Werkzeugmaschine an der Führungsschiene einigermaßen bequem entlang schieben kann. Wird jedoch die Führungseinrichtung bzw. die damit ausgestattete Hand-Werkzeugmaschine abseits der Führungsschiene benutzt, kommt es auf die Qualität des Untergrundes an, beispielsweise des Werkstückes, einer Mauerscheibe oder dergleichen. Dann kann es durchaus schwer sein, die Hand-Werkzeugmaschine bzw. die Führungseinrichtung auf dem Untergrund zu verschieben.

Es ist daher die Aufgabe der vorliegenden Erfindung, eine Führungseinrichtung und eine Hand-Werkzeugmaschine bereitzustellen, die möglichst einfach handhabbar sind.

Zur Lösung der Aufgabe ist eine Hand-Werkzeugmaschine gemäß des Anspruchs 1 vorgesehen.

Damit ist es möglich, die Führungseinrichtung quasi auf dem Untergrund abzurollen. Dabei ist es möglich, dass die Führungseinrichtung als eine Art Führungsplatte oder Führungsschlitten ausgestaltet ist, so dass sie nicht nur abseits einer Führungsschiene verwendbar ist, sondern auch direkt an einer Führungsschiene. Mit Hilfe der Rollenanordnung rollt die Führungseinrichtung bequem und leichtgängig auf dem Untergrund, als auch auf der Führungsschiene, so dass ein einfacher Betrieb möglich ist. Die Führungseinrichtung ist somit leichtgängig und ermöglicht ein exaktes Arbeiten.

An dieser Stelle sei bemerkt, dass die Erfindung nicht auf Werkzeugmaschinen mit Schneidwerkzeug in der Art von z.B. Sägeblättern begrenzt ist, sondern z.B. auch bei Fräsen oder dergleichen Anwendung finden kann.

Jedenfalls ist ein bevorzugtes Anwendungsgebiet der Erfindung der Bereich von Schlitzfräsen, insbesondere der Mauerschlitzfräsen.

Weiterhin sei bemerkt, dass die Führungseinrichtung - mit und ohne ein unten noch erläutertes Schwenklager für die Motorbaugruppe - auch eine erfindungsgemäße Führungseinrichtung als solche bilden kann, das heißt dass sie eine Montageeinrichtung bzw. eine Halteeinrichtung für die Hand-Werkzeugmaschine an sich, insbesondere die Motorbaugruppe aufweist. Somit kann also die Führungseinrichtung als solches separat benutzt und verkauft werden, wobei dann die Hand-Werkzeugmaschine bzw. deren Motorbaugruppe austauschbar sind. Somit ist es möglich, verschiedene Arten von Hand-Werkzeugmaschinen an einer solchen Führungseinrichtung zu verwenden und dabei jeweils die Vorteile der vorgenannten Ausführungsformen sowie auch die Vorteile der nachfolgenden Ausführungsform einzeln oder in Kombination zu nutzen:
Die Führungseinrichtung weist zweckmäßigerweise eine Abdeckung, beispielsweise eine Absaughaube, für das Schneidwerkzeug oder ein sonstiges Werkzeug auf.

Einen an sich eigenständigen Gedanken stellt es dar, dass eine Absaughaube gleichzeitig als Führungseinrichtung ausgestaltet ist. Mithin ist es also möglich, mit einer solchen Absaughaube direkt die Führungsaufgabe zu realisieren. An einer solchen Absaughaube, die zugleich eine Führungseinrichtung bildet, ist zweckmäßigerweise die Hand-Werkzeugmaschine, das heißt insbesondere deren Motorbaugruppe und/oder deren Werkzeug lösbar befestigbar. Somit kann also die Führungseinrichtung mit integrierter Absaughaube, oder anders formuliert, die Absaughaube mit integrierter Führungseinrichtung, mit unterschiedlichen Hand-Werkzeugmaschinen verwendet werden.

Die Erfindung betrifft ferner ein System, das die Führungseinrichtung und/oder die Hand-Werkzeugmaschine sowie eine feste oder flexible Führungsschiene umfasst, wobei an der Führungsschiene mindestens eine die Führungseinrichtung bezüglich einer Längsrichtung der Führungsschiene führende Gegen-Führungsfläche angeordnet ist.

Die Führungsschiene ist vorzugsweise plattenartig und/oder mit ihrer insbesondere flächigen Unterseite auf einen Untergrund, zum Beispiel ein Werkstück auflegbar.

Die Führungsschiene bildet zweckmäßigerweise eine Führungsbasis, an oder auf der die Führungseinrichtung entlang führbar ist.

Bevorzugt ist vorgesehen, dass mindestens eine Rolle, zweckmäßigerweise mehrere Rollen, zum Beispiel eine vordere und eine hintere Rolle, weiter bevorzugt mindestens zwei vordere und mindestens zwei hintere Rollen, auf der Führungsschiene abrollen können.

Vorteilhaft steht das Werkzeug seitlich vor die Führungsschiene vor, so dass es in den Untergrund bzw. das Werkstück eingreifen kann.

Ein Abstand zwischen einer Aufstandsfläche der mindestens einen Fahrrolle, mit der diese bei Benutzung auf einem Untergrund fährt bzw. auf dem Untergrund aufsteht, und einer unteren Wandfläche an der Unterseite ist jedenfalls so groß, dass beim Führen der Hand-Werkzeugmaschine auf dem Untergrund bzw. der Führungseinrichtung auf dem Untergrund die untere Wandfläche von dem Untergrund beabstandet ist und somit die Führungseinrichtung frei auf dem Untergrund rollt.

An dieser Stelle sei bemerkt, dass selbstverständlich nicht an jeder Stelle ein Abstand vorhanden sein muss, das heißt dass beispielsweise ein Teil der Fahrrollen einen solchen Abstand herstellen, während andere Bereiche der Führungseinrichtung beispielsweise Gleitflächen, insbesondere Gleitkufen oder dergleichen, aufweisen, so dass die Führungseinrichtung gleichzeitig auf dem Untergrund rollt und gleitet. Zweckmäßigerweise hat die Führungseinrichtung mindestens eine Führungsfläche, die sich entlang einer Längsrichtung der Führungseinrichtung erstreckt, quer dazu jedoch Führungsaufgaben erfüllt. Die Führungsfläche ist zum Gleiten an einer von einer Führungsschiene bereitgestellten Gegen-Führungsfläche vorgesehen. Die Führungsfläche ist zweckmäßigerweise feststehend, kann aber auch beweglich sein, z.B. von einer Rolle gebildet sein. Diese Rolle kann eine Seite einer Fahrrolle sein. Es ist auch möglich, dass die Rolle eine insbesondere winkelig, z.B. rechtwinkelig, zu der mindestens einen Fahrrolle drehbar gelagerte Führungsrolle sein.

Diese Führungsfläche kann Bestandteil einer Paarung bilden, die zudem eine quer zu der Längsrichtung im Querabstand angeordnete Fahrrolle oder eine weitere Führungsfläche umfasst, wobei der Querabstand vorteilhaft einem Abstand zweier Gegen-Führungsflächen entspricht, beispielsweise Seitenwänden von Vorsprüngen einer Führungsschiene, die die Fahrrolle und die Gegenführungsfläche seitlich, das heißt quer zur Längsrichtung, führt. Selbstverständlich ist es vorteilhaft, wenn beispielsweise auch ein Paar von Fahrrollen einen solchen Querabstand aufweisen und mit ihren Stirnseiten an der Gegen-Führungsfläche entlang rollen. Beispielsweise kann ein Nutvorsprung einer Führungsschiene zwischen die Fahrrollen eingreifen, wobei diese dann mit den einander zugewandten Stirnseiten, das heißt den Stirnseiten, die auch den Gegenführungsflächen zugewandt sind, an diesen Gegen-Führungsflächen entlang rollen.

Erfindungsgemäß ist vorgesehen, dass die Führungseinrichtung zwei oder mehr einander gegenüberliegende, Innenseiten einer Führungsnut bildende, Führungsflächen aufweist, die zum Gleiten an von der Führungsschiene bereitgestellten Gegenführungsflächen vorgesehen sind. Beispielsweise sind an der Schiene eine oder mehrere Führungsvorsprünge, insbesondere Längsvorsprünge, vorgesehen, die zwischen die Führungsflächen eingreifen.

Bevorzugt hat die Führungseinrichtung mindestens eine Längsführungsnut, die sich in Arbeitsrichtung bzw. in Längsrichtung der Führungseinrichtung erstreckt. Es versteht sich, dass auch ein Längsführungsvorsprung vorgesehen sein kann, der in eine komplementäre Führungsausnehmung an der Führungsschiene eingreift.

Eine vorteilhafte Ausführungsform der Erfindung sieht vor, dass die Führungseinrichtung an der Führungsschiene ausschließlich anhand von nicht durch die mindestens eine Fahrrolle gebildeten, z.B. feststehenden oder einstellbaren, Führungsflächen geführt ist. Die Führungseinrichtung kann auf oder an der Führungsschiene frei entlang rollen. Die Führungseinrichtung wird also beispielsweise durch den Längsführungsvorsprung der Führungsschiene, der in die Längsführungsnut der Führungseinrichtung eingreift, geführt.

Vorteilhaft ist vorgesehen, dass das Werkzeug und die Führungsflächen der Führungseinrichtung an einander entgegengesetzten Längsseiten der Führungseinrichtung angeordnet sind. Die Führungsflächen und das Werkzeug haben einen großen Querabstand.

Ein Abstand der Führungsflächen zueinander und/oder einer Führungsfläche zu einer Fahrrolle und/oder eines Paars von Fahrrollen, die jeweils eine Querführung realisieren, ist zweckmäßigerweise einstellbar. Somit kann beispielsweise auf diesem Wege ein Verschleißausgleich und/oder eine Anpassung an unterschiedliche Führungsschienen, insbesondere deren Gegen-Führungsflächen, realisiert werden.

Es versteht sich, dass auch ein Paar von Fahrrollen, die quer zur Arbeitsrichtung nebeneinander angeordnet sind, eine Querführung realisieren können. Bevorzugt sind deren Stirnseiten, die an einer Gegen-Führungsfläche der Führungsschiene entlang gleiten, gleitfähig, insbesondere mit einer Gleitbeschichtung versehen.

Ein anderer Aspekt kann vorsehen, dass mindestens eine der Fahrrollen in eine Führungsnut hinein vorsteht oder darin angeordnet ist, so dass eine Innenwandung, insbesondere eine schräg geneigte Innenwandung, der Führungsnut die eine Führungsfläche der Führungseinrichtung darstellt und ein in der Führungsnut angeordneter Seitenwandabschnitt der Führungsrolle, insbesondere eine Stirnseite, die andere Führungsfläche bzw. einen Gegenkontur dazu bildet.

Ein zum Führen vorgesehenen Seite einer Fahrrolle und/oder eine mindestens eine Führungsfläche und/oder eine sonstige Gleitfläche der Hand-Werkzeugmaschine oder der Führungseinrichtung kann vorteilhaft mit einer Gleitbeschichtung versehen sein.

Zwar ist es prinzipiell möglich, dass die Fahrrollenanordnung stets in ihrer Fahrposition bleibt, das heißt dass die Führungseinrichtung stets dafür vorgesehen ist, auf dem Untergrund zu rollen. Bevorzugt ist jedoch eine Höhenverstelleinrichtung für die Rollenanordnung als Ganzes oder zumindest eine der Fahrrollen, so dass die Rollenanordnung bzw. die Fahrrolle zwischen einer Rollposition und einer Gleitposition verstellbar ist. In der Rollposition steht die Rollenanordnung oder die entsprechend verstellte Fahrrolle vor eine Gleitfläche an der Unterseite der Führungseinrichtung vor, so dass die Führungseinrichtung zum Rollen auf dem Untergrund eingestellt ist. In der Gleitposition hingegen ist die Rollenanordnung oder die Fahrrolle hinter die Gleitfläche zurückverstellt, so dass die Führungseinrichtung zum Gleiten auf dem Untergrund verstellt ist.

Bevorzugt ist vorgesehen, dass in Längsrichtung der Führungseinrichtung, die der Arbeitsrichtung entspricht, vorn und/oder hinten jeweils eine Fahrrolle angeordnet ist. Somit ist das Werkzeug optimal abgestützt. Eine andere, in Kombination mit der vorigen Ausführungsform vorgesehene Konfiguration, die in der Zeichnung noch näher dargestellt ist, sieht vorteilhaft vor, dass zwei Rollen quasi ein Zwillingsrollenpaar bilden, wobei die eine Fahrrolle an der einen Stirnseite des Werkzeuges positioniert ist, die andere Fahrrolle an der entgegengesetzten Stirnseite. Somit ist also das Werkzeug bezogen auf die Längsrichtung der Führungseinrichtung oder die Arbeitsrichtung der Hand-Werkzeugmaschine bzw. der Führungseinrichtung an einander entgegengesetzten Seiten abgestützt. Die Anordnung ist dabei vorzugsweise so getroffen, dass in Längsrichtung oder Arbeitsrichtung jeweils ein Zwillingsrollenpaar vor und hinter dem Schneidwerkzeug angeordnet ist. Die obigen Ausführungen sind dabei so zu verstehen, dass selbstverständlich das Schneidwerkzeug erst dann vorhanden ist, wenn es an der Führungseinrichtung montiert ist. Dies bedeutet, dass die Fahrrollen beispielsweise vor und hinter einer Abdeckung, insbesondere einer Staubabsaugung, sowie zweckmäßigerweise beidseits rechts und links davon, d.h. quer zur Arbeitsrichtung, angeordnet sind.

Durch die Rollenanordnung kann ein verhältnismäßig großer Abstand zwischen einerseits einer Absaughaube oder einer Abdeckung für das Werkzeug und andererseits dem Untergrund vorhanden sind. Bevorzugt ist eine Art Zweikammerabsaugung vorgesehen dergestalt, dass ein Leitelement in Arbeitsrichtung vorn vor dem Werkzeug angeordnet ist. Somit wird in der Nähe des Werkzeuges ein erster Arbeitsluftstrom gebildet, der von einem in Arbeitsrichtung vorgelagerten Absaugstrom durch das Leitelement zumindest im Wesentlichen getrennt ist. Somit wird also auch der Arbeitsbereich vor dem Werkzeug effektiv abgesaugt, was beispielsweise die Sicht auf einen dort zweckmäßigerweise angeordneten Schnittanzeiger verbessert.

Vorzugsweise ist vorgesehen, dass in Querrichtung der Führungseinrichtung, d.h. quer zur Längserstreckungsrichtung derselben, einerseits das Werkzeug, insbesondere das Schneidwerkzeug, andererseits eine Führungsflächenanordnung angeordnet ist, beispielsweise eine Führungsnut oder ein Führungsvorsprung. Somit sind also an einander entgegengesetzten Längsseiten der Führungseinrichtung einerseits die Führungsmittel zur Führung an der Führungsschiene, andererseits das Werkzeug vorgesehen.

Die Motorbaugruppe ist vorteilhaft anhand eines Schwenklagers an der Führungseinrichtung, schwenkbar gelagert, um die Motorbaugruppe zwischen einer oberen Schwenkposition, in der die Werkzeugaufnahme von der Führungseinrichtung weggeschwenkt ist, so dass das Schneidwerkzeug zweckmäßigerweise nicht vor die Unterseite der Führungseinrichtung vorsteht, und einer unteren Schwenkposition zu schwenken, in der die Werkzeugaufnahme zur Einstellung einer insbesondere maximalen Schnitttiefe zu der Führungseinrichtung hin geschwenkt ist. Beispielsweise ist ein Schwenklager vorgesehen, mit dem die Motorbaugruppe als Ganzes an der Führungseinrichtung schwenkbar gelagert ist.

Bei der Hand-Werkzeugmaschine und/oder der Führungseinrichtung ist zweckmäßigerweise vorgesehen, dass sie eine Fixiereinrichtung mit einem Halteelement aufweist, an dem mindestens eine Haltekontur zum Fixieren der Motorbaugruppe in einer unteren Schwenkposition angeordnet ist, wobei die Haltekontur in der unteren Schwenkposition mit einer bezüglich der Führungseinrichtung ortsfesten oder ortsfest festlegbaren Gegen-Haltekontur verbindbar ist.

Die Haltekontur kann beispielsweise eine Rastkontur sein, die zum Verrasten mit der dann als Gegenrastkontur ausgestalteten Gegen-Haltekontur ausgestaltet ist. Dabei sind zweckmäßigerweise zwei oder mehr Rastkonturen vorgesehen, ebenfalls auch zwei oder mehr Gegen-Rastkonturen, je nachdem, welche Rastpositionen gewünscht sind.

Aber auch ein formschlüssiger Halt, beispielsweise mittels einer Zahnung, eines Gegenzahnes oder einer sonstigen Formschlusskontur, die zum formschlüssigen Halt an der dann eine Gegen-Formschlusskontur bildenden Gegenhaltekontur geeignet ist, liegt im Rahmen des Ausführungsbeispiels.

Die Haltekontur kann beispielsweise eine Rastkontur sein, die zum Verrasten mit der dann als Gegenrastkontur ausgestalteten Gegen-Haltekontur ausgestaltet ist. Dabei sind zweckmäßigerweise zwei oder mehr Rastkonturen vorgesehen, ebenfalls auch zwei oder mehr Gegen-Rastkonturen, je nachdem, welche Rastpositionen gewünscht sind.

Aber auch ein formschlüssiger Halt, beispielsweise mittels einer Zahnung, eines Gegenzahnes oder einer sonstigen Formschlusskontur, die zum formschlüssigen Halt an der dann eine Gegen-Formschlusskontur bildenden Gegenhaltekontur geeignet ist, liegt im Rahmen des Ausführungsbeispiels.

Weiterhin ist es möglich, dass ein Reibschluss hergestellt wird, das heißt dass die Haltekontur eine Reibschlussfläche aufweist, mit der ein reibschlüssiger Halt mit der Gegenkontur herstellbar ist.

Ferner ist es möglich, dass ein Klemmsitz hergestellt wird, das heißt dass die Haltekontur eine Klemmkontur umfasst, die im Klemmsitz an der Gegen-Haltekontur gehalten ist, wenn die gewünschte Schwenkposition eingestellt ist.

Die mindestens eine Haltekontur ist zweckmäßigerweise an einem Hebel oder einem Schieber angeordnet. Es versteht sich, dass eine Kombination aus Schwenken und Schieben auch denkbar ist, das heißt dass die Haltekontur an einem Halteelement angeordnet, das schwenkbar und verschieblich gelagert ist.

Das Halteelement umfasst beispielsweise einen Schwenkhebel, beispielsweise einen Rasthebel. Der Schwenkhebel hat zweckmäßigerweise einen der Werkzeug-Abdeckung angepassten Verlauf bzw. eine entsprechende Gestalt, z.B. einen bogenförmigen Verlauf.

Ein Endbereich des Halteelements ist zweckmäßigerweise als Betätigungselement ausgestaltet. Vorzugsweise ist das Halteelement in einem Innenraum der Werkzeug-Abdeckung angeordnet und steht mit einem oder beiden freien Enden vor die Werkzeug-Abdeckung vor, z.B. mit dem Betätigungselement und/oder mit der Haltekontur.

Die Fixiereinrichtung umfasst zweckmäßigerweise eine erste Haltekontur, beispielsweise eine Rastkontur, sowie auch eine zweite Haltekontur oder weitere Haltekonturen, beispielsweise auch Rastkonturen. An dieser Stelle sei bemerkt, dass die Kombination aus einer Rastkontur und einer Formschlusskontur, einer Rastkontur und einer Reibschlusskontur ohne weiteres möglich ist. Die erste Haltekontur ist beispielsweise zum Eingriff mit einer ersten Gegen-Haltekontur, beispielsweise einer Gegen-Rastkontur vorgesehen, die einer oberen, beispielsweise einer Nichtgebrauchsstellung entsprechenden Schwenkposition zugeordnet ist. Die zweite Haltekontur, beispielsweise auch eine Rastkontur, dient zum Eingriff, insbesondere zum Verrasten, mit einer zweiten, einer unteren Schwenkposition zugeordneten Gegen-Haltekontur. Bei dieser handelt es sich vorzugsweise auch um eine Gegen-Rastkontur, wobei sich auch eine Klemmkontur, eine Reibschlussfläche oder dergleichen als geeignet herausgestellt hat.

Die Haltekontur ist zweckmäßigerweise in Richtung einer Haltestellung, also zu der mindestens einer Gegen-Haltekontur hin, federbelastet. Dadurch wird quasi automatisch der Halt erreicht, wenn die gewünschte Schwenkposition eingestellt ist.

Dazu ist noch festzuhalten, dass dies zwar die obere Schwenkposition sein kann, so dass die Hand-Werkzeugmaschine beispielsweise in einer Nichtgebrauchsstellung arretierbar ist.

Es ist jedoch vorgesehen, dass eine zusätzliche, untere Schwenkposition vorhanden ist, in der ebenfalls ein Fixieren und Halten der Motorbaugruppe in der gewünschten Schwenkposition möglich ist.

Bevorzugt hat die Hand-Werkzeugmaschine eine Tiefenanschlageinrichtung zur Einstellung einer Schnitttiefe des Schneidwerkzeuges durch Begrenzung eines Schwenkweges der Motorbaugruppe mittels eines Tiefenanschlagelements. Das Tiefenanschlagelement ist an einer an der Führungseinrichtung angeordneten, beispielsweise schwenkbaren oder verschieblichen, Tiefenanschlaghalterung in mehreren Tiefeneinstellpositionen festlegbar. Somit hat also das Tiefenanschlagelement, wenn es festgelegt ist, eine gewünschte Höhe bzw. einen gewünschten Abstand zu der Führungseinrichtung. Beispielsweise handelt es sich bei dem Tiefenanschlagelement um eine Klemmschraube. An dem Tiefenanschlagelement und/oder der Tiefenanschlaghalterung sind eine oder mehrere Gegen-Haltekonturen vorhanden. Beispielsweise kann eine Mutter des Tiefenanschlagelements einen Rastvorsprung oder einen Hakenvorsprung haben, der zum Verrasten oder Halten der Haltekontur der Fixiereinrichtung geeignet ist.

Das Tiefenanschlagelement ist vorteilhaft an einer Tiefeneinstellführung geführt und an der Tiefeneinstellführung in mehreren Tiefeneinstellpositionen festlegbar.

Der Gegenhaltkörper ist vorteilhaft an der Führungseinrichtung feststehend angeordnet ist oder an der Führungsplatte schwenkbeweglich und/oder schiebebeweglich gelagert.

Die Motorbaugruppe oder das Schwenklager der Führungseinrichtung ist zweckmäßigerweise in Richtung der oberen Schwenkposition federbelastet und/oder an der Motorbaugruppe und/oder der Führungseinrichtung ist vorteilhaft zusätzlich zu einem Führungsgriff ein zweiter, mit einer zweiten Bedienhand zu ergreifender und zu dem Führungsgriff zweckmäßigerweise winkeliger Handgriff angeordnet.

Nachfolgend werden Ausführungsbeispiele der Erfindung anhand der Zeichnung erläutert. Es zeigen:
- Figur 1: eine perspektivische Schrägansicht von vorn oben einer ersten Hand-Werkzeugmaschine sowie einer Führungsschiene, die in
- Figur: in einer anderen Schrägperspektive und weiterhin einer alternativen Führungseinrichtung dargestellt ist,
- Figur 3a: die Führungseinrichtung der Hand-Werkzeugmaschine gemäß Figuren 1, 2 in einer oberen Schwenkposition,
- Figur 3b: die Führungseinrichtung gemäß Figur 3a, jedoch in einer unteren Schwenkposition,

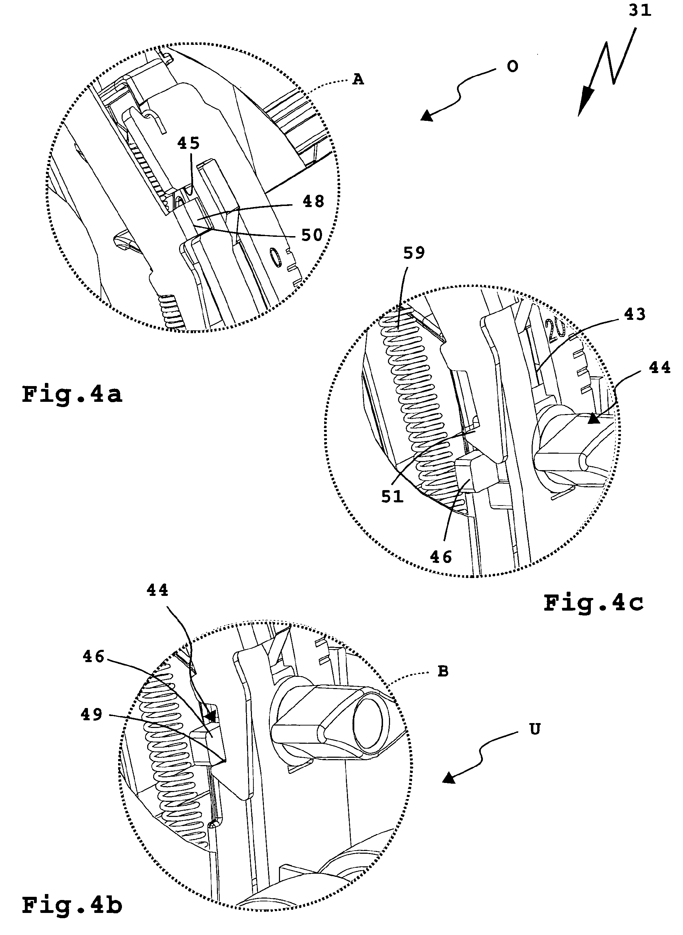

- Figur 4a: ein Detail A aus Figur 3a,
- Figur 4b: ein Detail B aus Figur 3b,
- Figur 4c: eine Ansicht ähnlich Figur 4b, allerdings mit einer Haltekontur vor Erreichen einer Haltestellung,
- Figur 5: die Hand-Werkzeugmaschine gemäß der vorgenannten Figuren von schräg hinten beim direkten Rollen auf einem Werkstück,
- Figur 6: eine weitere hintere Ansicht der Hand-Werkzeugmaschine,
- Figur 7: eine Staubabsaugung der Hand-Werkzeugmaschine gemäß Figur 5 entsprechend einem Detail C aus Figur 5, jedoch mit teilweise geöffneter Abdeckung,
- Figur 8: eine perspektivische Schrägansicht von hinten oben einer zweiten Hand-Werkzeugmaschine beim direkten Fahren auf einem Untergrund,
- Figur 9: die Hand-Werkzeugmaschine gemäß Figur 8, jedoch beim Fahren entlang einer Führungsschiene, und
- Figur 10: die Hand-Werkzeugmaschine gemäß Figur 8, jedoch in einer nach unten verstellten, einen Schnitt durchführenden Position.

Die in Zeichnung dargestellten Hand-Werkzeugmaschinen 10a, 10b umfassen jeweils eine Motorbaugruppe 11a, 11b, die mittels eines Schwenklagers 12 schwenkbar an einer Führungseinrichtung 14a, 14b gelagert sind. In Bezug auf die nachfolgend noch beschriebene Fixiereinrichtung 31 ist dieses Schwenklager 12 zwar wesentlich, in Bezug auf die weiterhin erläuterte Rollenanordnung 60 mit einer oder mehreren Rollen, ist jedoch die Schwenkbarkeit der Motorbaugruppe 11a, 11b bezüglich der Führungseinrichtung 14a, 14b unwesentlich.

In einem Maschinengehäuse 15 der Motorbaugruppe 11a, 11b ist jeweils ein Antriebsmotor 16 angeordnet, der zum Antrieb eines Werkzeugs, insbesondere eines Schneidwerkzeugs 17, dient.

Die Führungseinrichtung 14a, 14b ist mit ihrer Unterseite 18 auf einen Untergrund auflegbar, beispielsweise auf ein Werkstück 79 oder eine Führungsschiene 80. An der Oberseite 20 der Führungseinrichtung 14 befindet sich eine Abdeckung für das Werkzeug, beispielsweise das Schneidwerkzeug 17, nämlich eine Absaughaube 19a, 19b. Die Absaughaube 19a, 19b ist insgesamt relativ zu der Führungseinrichtung 14a hin, insbesondere deren jeweilige Führungsplatte 21a, 21b, hin verschwenkbar, nämlich um die Schwenkachse 13 des Schwenklagers 12. Aus der Absaughaube 19a, 19b mündet ein Absaugstutzen 22 aus, an dem beispielsweise ein Staubsaugerschlauch anbringbar ist.

Das Schwenklager 12 ist vorteilhaft in Arbeitsrichtung 23 vorn an der Führungsplatte 21a, 21b angeordnet, das heißt also im Bereich deren Vorderseite 24.

Das Werkzeug, zweckmäßigerweise ein Schneidwerkzeug 17, befindet sich an der in Arbeitsrichtung 23 rechten Längsseite 25 der Führungsplatte 21a, 21b. Der Absaugstutzen 22 erstreckt sich beispielsweise zur linken Längsseite 26 (bezogen auf die Arbeitsrichtung 23) hin. Bevorzugt ist der Absaugstutzen 22 nah bei einem Bereich angeordnet, in dem das Werkzeug in das Werkstück 79 einschneidet.

Das Maschinengehäuse 15 ist an einer Halterung 28 gehalten ist dort in mehreren Schwenkpositionen befestigbar, so dass das Maschinengehäuse 15 jeweils einen bequem handhabbaren Handgriff für den Bediener bildet. Beispielsweise erstreckt sich das Maschinengehäuse 15 in der in der Zeichnung dargestellten Weise von der Vorderseite 24 in Richtung der Hinterseite 27 der Führungseinrichtung 14a, 14b nach schräg oben. Der Bediener kann also das Maschinengehäuse 15 ergreifen und nach unten in Richtung der Führungseinrichtung 14a, 14b, insbesondere der Führungsplatte 21a, 21b schwenken, um den Sägeschnitt und die sonstige Werkstückbearbeitung durchzuführen.

Die Halterung 28 umfasst einen Klemmring 29, der mittels einer Klemmschraube 30 enger gestellt werden kann, so dass er das Maschinengehäuse 15 aufnehmen kann. Die Halterung 28 ist ringförmig, so dass eine in der Zeichnung nicht sichtbare Werkzeugwelle, an der das Schneidwerkzeug 17 angeordnet ist, die Halterung 28 durchdringen kann und in den Innenraum der Absaughaube 19 vorsteht, wo dann wiederum das Schneidwerkzeug 17 montierbar ist. Die Montage läuft also in an sich bekannter Weise so ab, dass zunächst das Maschinengehäuse 15 an der Halterung 28 befestigt wird und anschließend das Schneidwerkzeug 17 an der Werkzeugaufnahme befestigt wird.

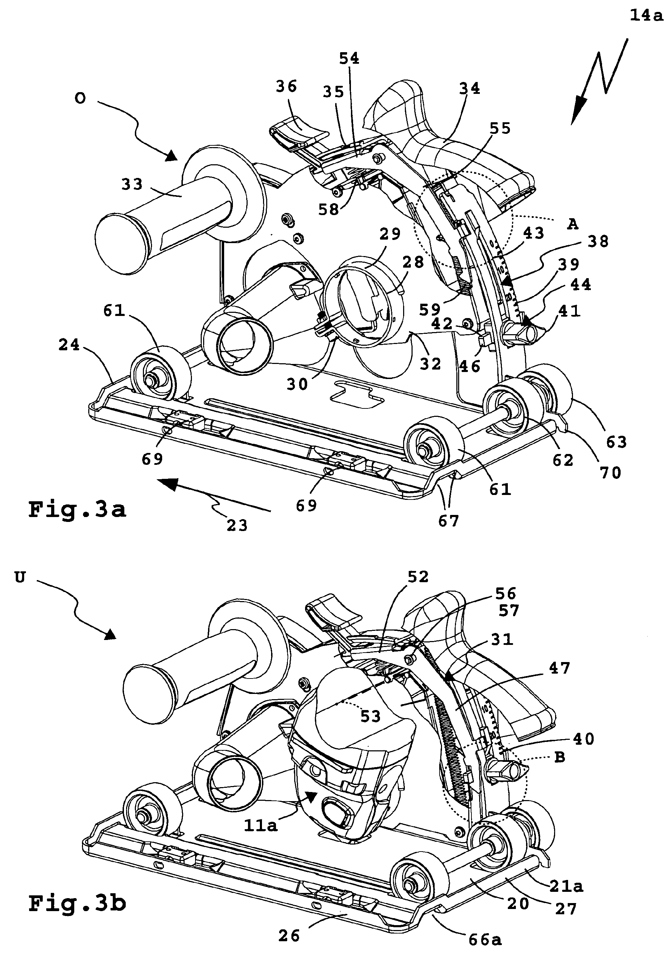

Die an der Halterung 28 befestigte Motorbaugruppe 11a, 11b schwenkt also als Ganzes zusammen mit der Absaughaube 19a, 19b zwischen einer oberen Schwenkposition O und einer unteren Schwenkposition U, in der mit dem Schneidwerkzeug 17 Sägeschnitte oder Frässchnitte durchführbar sind. In der oberen Schwenkposition O ist das Schneidwerkzeug 17 hinter die Unterseite 18 der Führungseinrichtung 14a, 14b zurück verschwenkt, so dass das Schneidwerkzeug 17 vollständig in den Innenraum der Absaughaube 19a, 19b zurückverstellt ist und/oder nicht mehr nach unten vor die Unterseite 18 der Führungseinrichtung 14a, 14b vorsteht. In der unteren Schwenkposition U hingegen, die beispielsweise auch eine maximale Schnitttiefe oder Sägetiefe ermöglicht, steht das Schneidwerkzeug 17 recht weit nach unten vor die Unterseite 18 vor, siehe beispielsweise Figuren 3b.

Die Halterung 28 befindet sich an einer Seitenwand 32 der Absaughaube 19a, 19b. An dieser Seitenwand 32 ist zweckmäßigerweise noch ein Führungsgriff 33 angeordnet, der sich quer zur Arbeitsrichtung 23 erstreckt, d.h. also quer zu den Längsseiten 25, 26 verläuft. Eine hintere Wand 34 der Absaughaube 19a, 19b kann in einer bevorzugten Ausführungsform, wie beispielsweise bei der Führungseinrichtung 14a, 14b der Fall, als ein Handgriff, insbesondere ein pistolenartiger Handgriff, ausgestaltet sein und somit eine weitere Führungsaufgabe erfüllen. Der Bediener kann also die Absaughaube 19a, 19b am Führungsgriff 33 und an der hinteren Wand 34 ergreifen. Bevorzugt sind jedoch das Maschinengehäuse 15 und zudem noch der Führungsgriff 33 als Handgriff vorgesehen.

An einer Oberseite 35 der Absaughaube 19 befindet sich ein Betätigungselement für die Fixiereinrichtung 31. Die Fixiereinrichtung 31 hat teilweise identische Komponenten wie die nachfolgend noch im Detail beschriebene Tiefenanschlageinrichtung 38 bzw. wirkt mit dieser zusammen. Die Tiefenanschlageinrichtung 38 umfasst eine Tiefenanschlaghalterung 39, beispielsweise ein bogenförmiges Blech, an dem eine Skala 40 zur Anzeige der jeweiligen Tiefeneinstellposition vorteilhaft angeordnet ist. Ein Tiefenanschlagelement 44 ist an einer Tiefeneinstellführung 43 der Tiefenanschlaghalterung 39 verschieblich geführt. Das Tiefenanschlagelement 44 umfasst eine Klemmschraube 41, die mit einer Klemmmutter 42 in an sich bekannter Weise verschraubt ist. Durch Lösen der Klemmschraube 41 ist es möglich, dass Tiefenanschlagelement 44 entlang der Tiefeneinstellführung 43 zu verstellen, um die gewünschte Stellposition der Absaughaube 19a, 19b und somit auch der Motorbaugruppe 11a, 11b zu begrenzen. Die Klemmschraube 41 durchdringt beispielsweise einen Schlitz der Tiefeneinstellführung 43.

Die Tiefenanschlaghalterung 39 erstreckt sich vorteilhaft bogenförmig um die Schwenkachse 13. An der Tiefenanschlaghalterung 39 ist eine Gegen-Haltekontur 45 in Gestalt einer Rastausnehmung angeordnet. Eine weitere Gegen-Haltekontur 46 wird von dem Tiefenanschlagelement 44 bereitgestellt. Beispielsweise ist ein Rastvorsprung an der Klemmmutter 42 vorgesehen, der von der seitlich von der Tiefeneinstellführung 43 bzw. der Tiefenanschlaghalterung 39 absteht.

Das Betätigungselement 36 dient zur Betätigung eines Halteelements 47, das zwei Haltekonturen 48, 49 zur Zusammenwirkung mit den Gegen-Haltekonturen 45, 46 aufweist. Die Haltekontur 48 umfasst beispielsweise einen Formschlussvorsprung 50, die Haltekontur 49 einen Rasthaken 51.

Das Halteelement 47 ist als ein Schwenkhebel 52 ausgestaltet, der um eine Schwenkachse 53 schwenkbar ist. An einem Betätigungsbereich 54 des Schwenkhebels 52 ist das Betätigungselement 36 angeordnet, an einem Haltebereich 55 befinden sich die beiden Haltekonturen 48, 49. Der Schwenkhebel 52 hat einen bogenförmigen Verlauf, so dass er etwa mit der bogenförmigen Außenkontur oder Oberseitenkontur der Absaughaube 19a, 19b korreliert. Der Schwenkhebel 52 ist nämlich in einem Innenraum der Absaughaube 19a, 19b angeordnet, so dass die Gefahr eines Verklemmens, einer Beschädigung oder dergleichen, insbesondere im rauen Arbeitsbetrieb der Hand-Werkzeugmaschine 10a, 10b vermieden wird. Beispielsweise ist an der Absaughaube 19a, 19b ein Lagervorsprung 56 angeordnet, der in eine Lageraufnahme 57 des Schwenkhebels 52 eingreift. Die Schwenkachse 53 verläuft quer zur Arbeitsrichtung 23, vorzugsweise etwa parallel zur Schwenkachse 13 oder exakt parallel dazu.

Durch Niederdrücken des Schwenkhebels 52, der durch eine Feder 58 in seine Fixierstellung beaufschlagt ist, können die Haltekonturen 48, 49 außer Eingriff mit den Gegen-Haltekonturen 45, 46 gebracht werden. In der oberen Schwenkposition O greift nämlich die Haltekontur 48 in die Gegen-Haltekontur 45 ein. Die Haltekontur 48 ist beispielsweise als ein Formschlussvorsprung 50 ausgestaltet, der seitlich vom Schwenkhebel 52 absteht. Beispielsweise ist der Formschlussvorsprung 50 winkelig, so dass sein freier, in Richtung der Tiefenanschlaghalterung 39 vorstehender Abschnitt durch Ausschwenken des Schwenkhebels 52 außer Eingriff mit der Gegen-Haltekontur 45 gebracht werden kann.

Dieselbe Schwenkbewegung ist auch dafür vorgesehen, die an einem Rasthaken 51 vorgesehene Haltekontur 49 außer Eingriff mit der zugeordneten Gegen-Haltekontur 46 zu bringen.

Dadurch dass die Gegen-Haltekontur 46 direkt am Tiefenanschlagelement 44 angeordnet ist, wird durch Einstellung der jeweiligen Tiefenposition bzw. Schwenkposition der Tiefenanschlageinrichtung 38 gleichzeitig eine untere Schwenkposition definiert, in der die Fixiereinrichtung 31 quasi automatisch verhakt. Zum Niederdrücken bzw. zum Wegschwenken der Absaughaube 19a, 19b aus der oberen Schwenkposition O muss der Bediener nämlich eine Kraft entgegen der Kraft einer Rückstellfeder 59 aufwenden, die die Absaughaube 19a, 19b, somit also auch die Motorbaugruppe 11a, 11b in Richtung der oberen Schwenkposition O beaufschlagt.

Eine Längserstreckungsachse der Rückstellfeder 59 verläuft zweckmäßigerweise rechtwinkelig zur Schwenkachse 13. Ist die Rückstellfeder 59 längs der Schwenkachse 13 unbelastet, d.h. es entstehen keine Seitenkräfte. Ein Vorteil, der sich daraus ergeben kann, ist das eine Schwenkbewegung um das Schwenklager 12 leichter fällt. Ein anderer Vorteil kann sein, dass die Anordnung zu geringerem Verschleiß neigt.

Es versteht sich, dass in der unteren Schwenkposition U bzw. der eingestellten Tiefenposition auch ein Verklemmen mit dem Gegenhalt bzw. der im Tiefenanschlagelement 44 möglich wäre.

Weiterhin ist es denkbar, dass die Schnitttiefenfixierung durch einen aktiven Bedienereingriff erfolgt, d.h. dass der Bediener beispielsweise zum Fixieren der Fixiereinrichtung 31 auf das Betätigungselement 36 einwirken muss, z.B. durch Heranziehen desselben.

Die Feder 58 ist eine Druckfeder, die einerseits an der Absaughaube 19a, andererseits am Betätigungsbereich 54 des Schwenkhebels 52 abgestützt ist.

Die Führungseinrichtung 14a, 14b kann mittels einer Rollenanordnung 60, die Fahrrollen 61, 62 und 63 umfasst, auf dem Werkstück 79 oder einem sonstigen Untergrund, nämlich beispielsweise auch der Führungsschiene 80, bequem verfahren werden. Der Widerstand beim Verschieben bzw. Verfahren der Führungseinrichtung 14a, 14b auf dem Werkstück 79 oder der Führungsschiene 80 ist dabei gering. Insbesondere dann, wenn der Untergrund rau ist, beispielsweise eine Rippenstruktur hat, was z.B. bei Mauerwerk der Fall ist, erweist sich die Rollenanordnung 60 als vorteilhaft. Zur Durchführung von exakten Fräs- oder Sägeschnitten hingegen verwendet man üblicherweise eine Führungsschiene, z. B. die Führungsschiene 80. Auch dort erweist sich die Rollenanordnung 60 als vorteilhaft.

Die Fahrrollen 61, 62 und 63 sind an Achsen 64 angeordnet. Die Achsen 64 sind an Lagern 65 gehalten, die nach oben, d.h. vor die Oberseite 20 der Führungsplatten 21a, 21b vorstehen. Beispielsweise sind die Achsen 64 und/oder die Fahrrollen 61-63 durch Splintringe oder dergleichen andere axial festlegende Maßnahmen an den Achsen 64 befestigt. Dabei ist festzuhalten, dass sowohl die Achsen 64 drehbar gelagert sein können, als auch die Fahrrollen 61-63 drehbar an den Achsen 64 drehbar sein können (oder beides).

Jeweils eine Achse 64 mit Fahrrollen 61-63 befindet sich in Arbeitsrichtung 23 vorn, d.h. in der Nähe der Vorderseite 24, und in Arbeitsrichtung hinten, d.h. im Bereich der Hinterseite 27. An den Führungsplatten 21a, 21b sind Durchtrittsöffnungen vorgesehen, durch die die Fahrrollen 61-63 nach unten vor die Unterseite 18 der Führungsplatte 21a, 21b vorstehen. Somit ist also ein Abstand zwischen dieser Unterseite 18 und Aufstandsflächen der Fahrrollen 61-63 gegeben, mit denen diese auf dem Untergrund abrollen. Prinzipiell wäre es auch denkbar, die Fahrrollen direkt an der Unterseite anzubringen, so dass die Durchtrittsöffnungen nicht erforderlich sind.

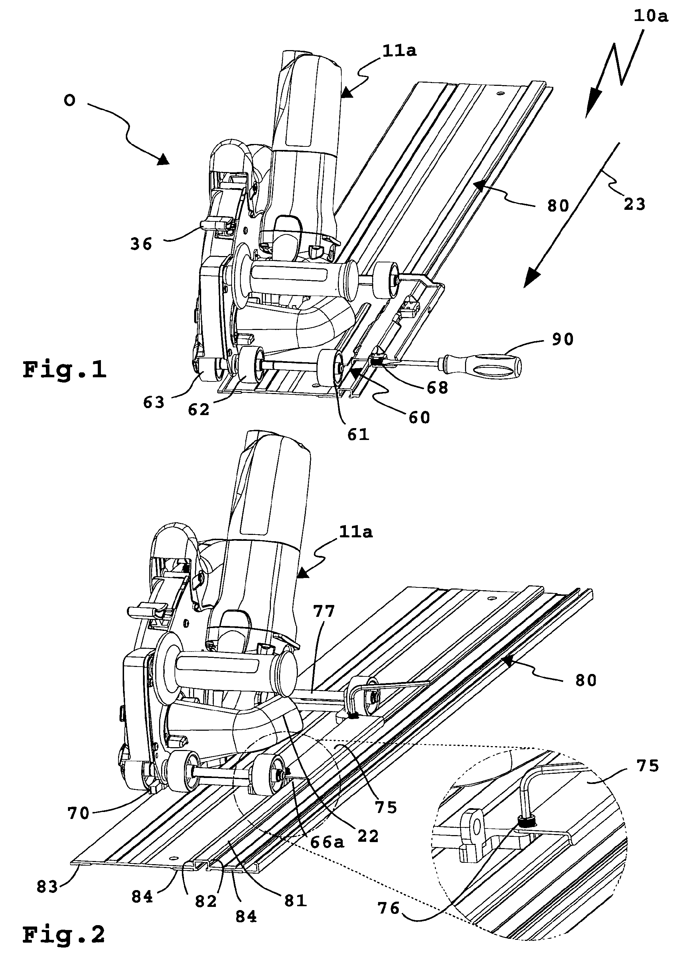

Weiterhin ist es möglich, statt der feststehend an den Führungsplatten 21a, 21b angeordneten Lagerböcke, die die Lager 65 bereitstellen, bewegliche Lager vorzusehen, so dass eine Höhenverstellung der Fahrrollen 61-63 relativ zur Unterseite 18 der Führungseinrichtung 14a, 14b möglich ist. Somit können also die Fahrrollen 61-63 quasi inaktiv gestellt werden, so dass die Unterseite 18 direkt eine Gleitfläche bereitstellt, mit der die Führungseinrichtung 14a, 14b auf einem Untergrund gleiten kann. Bei der Führungseinrichtung 14a, 14b sind jedoch auch optimale Querführungseigenschaften realisiert. Die Führungseinrichtung 14a weist nämlich in der Ausgestaltung gemäß Figur 1 eine Führungsnut 66a, in der Ausgestaltung gemäß Figur 2 eine Führungsnut 66b auf. Die Führungsnut 66 dient zum Eingriff eines Führungsvorsprungs 81 der Führungsschiene 80. Der Führungsvorsprung 81 und die Führungsnuten 66a, 66b erstrecken sich in Arbeitsrichtung 23, d.h. in der jeweiligen Längsrichtung der Führungseinrichtung 14a, 14b bzw. der Führungsschiene 80. Die Queraußenseiten des Führungsvorsprunges 81 bilden dabei Gegen-Führungsflächen 82, die mit Führungsflächen 87 der Führungseinrichtungen 14a, 14b zusammen wirken. Die Führungsflächen 87 sind nämlich durch sich vom Boden der Führungsnuten 66a, 66b weg erstreckenden Seitenwände gebildet, an denen die Führungsflächen 67 ausgebildet sind. Mithin führen also die Führungsflächen 67, 82 die Führungseinrichtung 14a, 14b beim Bewegen entlang der Führungsschiene 80, d.h. bei einer Bewegung entlang der jeweiligen Längsrichtung.

Zwar wäre es prinzipiell möglich, dass nur feststehende Führungsflächen vorgesehen sind. Vorliegend sind jedoch eine Anpassung an unterschiedlich ausgeformte Führungsvorsprünge, bzw. Führungsvorsprünge mit unterschiedlicher Querbreite vorgesehen:
Eine der Führungsflächen 67 wird beispielswiese durch die Stirnseiten der Fahrrollen 61 bereitgestellt, die also quasi mit ihren Seitenflanken entlang dem Führungsvorsprung 81 gleiten. Es ist aber auch möglich, dass die Fahrrollen 61 freidrehen, d.h. dass beispielsweise die dem Führungsvorsprung 81 zugewandte Wand der Führungsnut 66 die Führungsfläche 67 an dieser Stelle bereitstellt.

Eine gegenüberliegende Führungsfläche 67 ist jedoch verstellbar. Hierfür sind Einstellelemente 68 vorgesehen, beispielsweise Schrauben, die mittels eines Schraubendrehers 90 verstellbar sind. Die Stirnseiten der Einstellelemente 68, die entsprechend den Haltern 69 an der Führungseinrichtung 14a, 14b gehalten sind, beispielsweise dort eingeschraubt sind, bilden die verstellbare Führungsfläche 67. Die Einstellelemente 68 sind also quer zur Längsrichtung bzw. quer zur Arbeitsrichtung 23 verstellbar, so dass ein Querabstand zwischen einander gegenüberliegenden Führungsflächen 67 verstellbar ist.

Vorteilhaft ist vorgesehen, dass die Führungseinrichtung 14a, 14b und/oder die Führungsschiene 80 mit Gleitbeschichtungen oder Gleitflächen versehen sind. Beispielsweise können die Führungsflächen 67 mit einer Gleitbeschichtung versehen sein. Vorteilhaft ist es auch, wenn beispielsweise die Seitenflanken der Fahrrollen 61 und/oder 62 und/oder 63 mit einer Gleitbeschichtung versehen sind, so dass sie beim Entlangrollen bzw. Gleiten an einer Gegenkontur, beispielsweise der Gegen-Führungsfläche 82, leicht gängig sind. Insbesondere bei der Gegen-Führungsfläche 82 ist es vorteilhaft, wenn sie mit einer Gleitbeschichtung versehen ist. Dies kann beispielsweise dadurch geschehen, dass ein Gleitband auf die jeweilige Grundfläche des Basiskörpers der Führungsschiene 80 aufgeklebt ist. Auch eine Teflonbeschichtung oder dergleichen ist denkbar.

Die Fahrrollen 62, 63 bilden quasi ein Zwillingspaar von Fahrrollen. Zwischen den Fahrrollen 62, 63 steht vorteilhaft ein Schnittanzeiger 70 vor, zweckmäßigerweise vorn und hinten, so dass der Bediener insbesondere beim Betrieb ohne Führungsschiene 80 ein Indiz auf den durchzuführenden Schnitt in das Werkstück 79 erhält.

An einer oder beiden Längsquerseiten der Führungsschiene 80 ist zweckmäßigerweise ein Splitterschutzkörper 83 vorgesehen, der direkt auf dem zu bearbeitenden Werkstück, zum Beispiel dem Werkstück 79, aufliegt. Der Splitterschutzkörper 83 besteht aus einem mit dem Werkzeug 17 bearbeitbaren, insbesondere schneidbaren, Werkstoff, beispielsweise einem elastischen, insbesondere transparenten, Kunststoff. Der Splitterschutzkörper 83 ist mit dem Schneidwerkzeug 17 schneidbar. Der Splitterschutzkörper 83 wird beim ersten Gebrauch der Führungsschiene 80 durch das Schneidwerkzeug 17 abgelängt, so dass seine freie Seitenkante einen exakten Querbezug zu dem Führungsvorsprung 81 aufweist.

An der Unterseite der Führungsschiene 80 können Auflagekörper 84 vorgesehen sein, beispielsweise Anti-Rutschauflagekörper, so dass die Führungsschiene 80 an dem Untergrund reibschlüssig anliegt, auf den sie aufgelegt wird.

Vorteilhaft ist bei einer erfindungsgemäßen Hand-Werkzeugmaschine bzw. einer erfindungsgemäßen Führungseinrichtung vorgesehen, dass Rollen eines Rollenpaars an einander entgegengesetzten Seiten des jeweiligen Schnittwerkzeuges vorgesehen ist. Dies ist durch die Fahrrollen 62, 63 realisiert. Während die Fahrrollen 62 noch im Bereich der Führungsplatte 21a, 21b sind, stehen die Fahrrollen 63 nach quer außen, d.h. vor die rechte Längsseite 25 der Führungsplatte 21a, 21b vor. Somit ist also das Schneidwerkzeug 17 optimal abgestützt, was ein präzises Arbeiten ermöglicht.

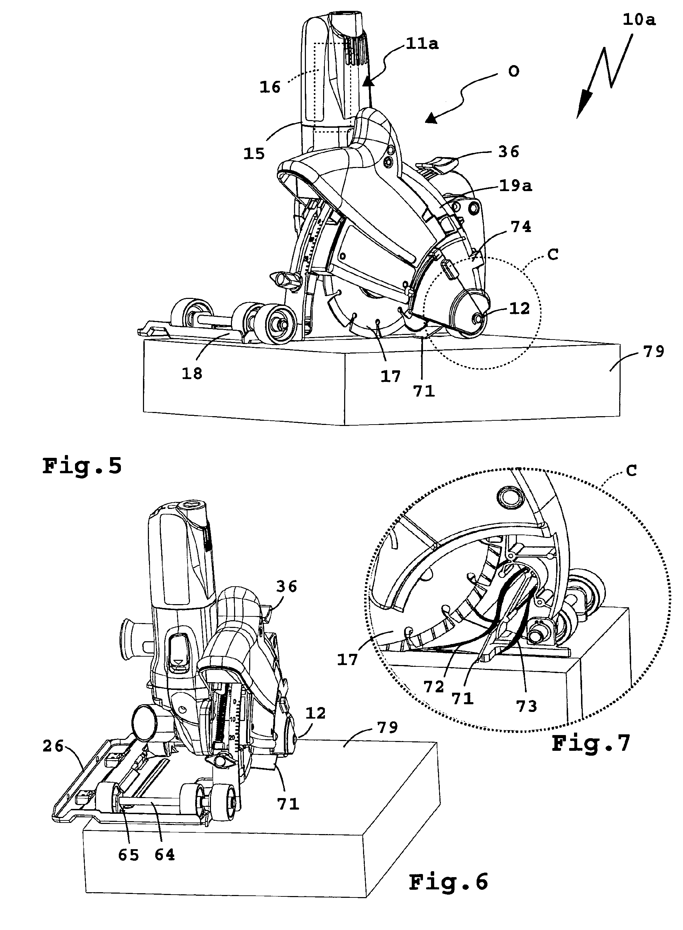

Aus Figur 7 ist ein innovatives Absaugkonzept ersichtlich:
Insbesondere durch das Vorsehen der Rollenanordnung 60 ist ein verhältnismäßig großer Abstand zwischen der Absaughaube 19a, 19b und dem zu bearbeitenden Untergrund bzw. Werkstück 79 vorhanden. Dagegen wirkt das Absaugkonzept vorteilhaft wie folgt:
   Es ist nämlich eine Art Zweikammerabsaugung vorgesehen, wobei eine Art Leitelement 71 zwei Absaugluftströme 72 und 73 quasi voneinander trennt. Das Leitelement 71 ist in Arbeitsrichtung 23 gesehen dem Schneidwerkzeug 17 sozusagen vorgelagert. Das Leitelement 71, beispielsweise eine Wandbauteil, steht nach unten in Richtung Untergrund vor und erstreckt sich zweckmäßigerweise etwa bis zur Unterseite 18 der Führungseinrichtung 14a, 14b. Es kann vorgesehen sein, dass das Leitelement 71 ein flexibles Leitelement ist, so dass es beispielsweise flexibel auf dem Untergrund aufliegen kann. Insbesondere bei dieser Ausgestaltung ist es zweckmäßig, wenn das Leitelement 71 bis zur Aufstandsfläche der Fahrrollen 61-63 reicht, d.h. unmittelbar an dem Untergrund anliegt. Von dem Schneidwerkzeug 17 aufgewirbelter Staub wird also vom Leitelement 71 quasi kanalisiert und mit dem Absaugluftstrom 72 mitgerissen. Aber auch der in Arbeitsrichtung 23 vorgelagerte Bereich wird noch effektiv abgesaugt. Dort bildet sich ein Absaugluftstrom 73 aus. Die beiden Absaugluftströme 72, 73 strömen sodann in den Absaugstutzen 22 ein.

Wenn der Bediener einen besseren Blick auf den Sägeschnitt haben will, kann er eine Abdeckung 74 wegschwenken. Die Abdeckung 74 ist beispielsweise als eine Wand ausgestaltet, insbesondere als eine kreissegmentartige Wand. Die Abdeckung 74 kann zwischen einer unteren, das Werkzeug im Wesentlichen verdeckenden Stellung und einer Freigabestellung verstellt werden. Dann die Abdeckung 74 von der Unterseite 18 weggeschwenkt, so dass der Einschnittbereich des Schneidwerkzeugs 17 frei steht. Die Abdeckung 74 ist zweckmäßigerweise aus Kunststoff, vorzugsweise aus transparentem Kunststoff.

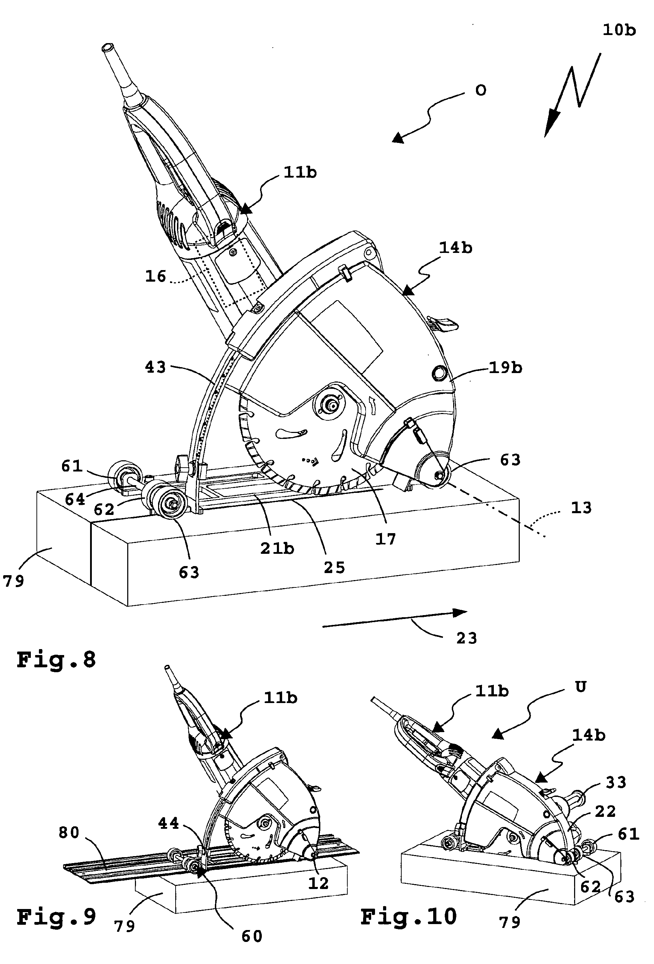

Bei den vorigen Ausführungen wurde die Führungseinrichtung 14a, 14b im Wesentlichen als eine Führungsplatte 21a, 21b beschrieben. Es versteht sich, dass die plattenartige Gestalt nicht zwingend notwendig ist. Beispielsweise könnte die Führungseinrichtung 14a, 14b auch gestellartig oder rahmenartig ausgestaltet sein, was beispielsweise bei den Ausführungsformen gemäß Figur 2 sowie Figuren 8-10 der Fall ist.

Weiterhin ist es möglich, ein Führungselement nachträglich, insbesondere zur Anpassung an eine jeweilige Führungsschiene, an einer Führungseinrichtung im Sinne der Erfindung anzuordnen. So ist beispielsweise an einem Führungsgestell 77, das in Figur 2 dargestellt ist, ein Führungswinkel 75 mittels Schrauben 76 lösbar befestigbar. Die Schrauben 76 sind beispielsweise Inbusschrauben.

## Patentansprüche

1. Führungseinrichtung (14a; 14b), die mit ihrer Unterseite (18) auf einem Untergrund führbar ist, für eine Hand-Werkzeugmaschine mit einer Motorbaugruppe (11a; 11b) die einen Antriebsmotor (16) und eine durch den Antriebsmotor (16) antreibbare Werkzeugaufnahme für ein insbesondere als Schneidwerkzeug (17) ausgestaltetes Werkzeug umfasst, wobei die Führungseinrichtung (14a; 14b) eine Rollenanordnung (60) mit mindestens einer Fahrrolle (61-63) aufweist, mit der die Führungseinrichtung (14a; 14b) auf einem Untergrund verfahrbar ist, wobei die Führungseinrichtung zwei einander gegenüberliegende, Innenseiten einer Führungsnut (66a; 66b) bildende, Führungsflächen (67) zum Gleiten an von einer Führungsschiene (80) bereitgestellten Gegen-Führungsflächen (82) aufweist, **dadurch gekennzeichnet, dass** die Rollenanordnung (60) außerhalb der Führungsnut und seitlich neben der Führungsnut (66a; 66b) angeordnet ist.

2. Führungseinrichtung (14a; 14b) nach Anspruch 1, **dadurch gekennzeichnet, dass** sie mindestens eine sich in einer Längsrichtung der Führungseinrichtung erstreckende, insbesondere feststehende oder beweglich gelagerte, Führungsfläche (67) zum Führen in der Längsrichtung und zum Gleiten an einer und/oder Rollen von einer Führungsschiene (80) bereitgestellten Gegen-Führungsfläche (82) aufweist.

3. Führungseinrichtung nach Anspruch 1 oder 2, **dadurch gekennzeichnet, dass** mindestens eine Fahrrolle (61-63) in Arbeitsrichtung (23) vor und/oder hinter dem Werkzeug angeordnet ist und/oder quer zur Arbeitsrichtung (23) neben dem Werkzeug, insbesondere einen Bestandteil eines Paars von Fahrrollen (62-63), das an einander entgegengesetzten Seiten des Werkzeugs neben dem Werkzeug angeordnet ist, bildend, angeordnet ist.

4. Führungseinrichtung (14a; 14b) nach einem der vorhergehenden Ansprüche, **dadurch gekennzeichnet, dass** sie einen Abstand zwischen einer Aufstandsfläche der mindestens einen Fahrrolle (61-63), mit der diese bei Benutzung auf einem Untergrund fährt, und einer unteren Wandfläche an der Unterseite aufweist, so dass beim Führen der Hand-Werkzeugmaschine auf dem Untergrund die untere Wandfläche von dem Untergrund beabstandet ist und die Führungseinrichtung frei auf dem Untergrund rollt.

5. Führungseinrichtung (14a; 14b) nach einem der vorhergehenden Ansprüche, **dadurch gekennzeichnet, dass** sie mindestens ein Paar quer zu der Längsrichtung in einem Querabstand angeordneter Fahrrollen (61-63) oder eine Paarung aus einer Fahrrolle (61-63) und einer dieser zugeordneten Führungsfläche (67) aufweist, wobei der Querabstand vorteilhaft einem Abstand zweier dem Fahrrollen-Paar oder der Paarung aus der Führungsfläche (67) und der Fahrrolle (61-63) zugeordneter, diese seitlich führender Gegen-Führungsflächen (82) entspricht.

6. Führungseinrichtung (14a; 14b) nach einem der vorhergehenden Ansprüche, **dadurch gekennzeichnet, dass** ein Abstand der Führungsflächen (67) zueinander oder einer Führungsfläche (67) zu einer Fahrrolle (61-63) oder ein Querabstand zweier Fahrrollen (62-63) einstellbar ist.

7. Führungseinrichtung (14a; 14b) nach einem der vorhergehenden Ansprüche, **dadurch gekennzeichnet, dass** sie eine Höhenverstelleinrichtung für die Rollenanordnung (60) als Ganzes oder zumindest einer Fahrrolle (61-63) zum Verstellen der Rollenanordnung (60) oder der Fahrrolle (61-63) zwischen einer Rollposition, in der die Rollenanordnung (60) oder die Fahrrolle (61-63) vor eine Gleitfläche an der Unterseite der Führungseinrichtung vorsteht, und einer Gleitposition aufweist, in der die Rollenanordnung (60) oder die Fahrrolle (61-63) hinter die Gleitfläche zurück verstellt ist.

8. Führungseinrichtung (14a; 14b) nach einem der vorhergehenden Ansprüche, **dadurch gekennzeichnet, dass** sie ein Gestell oder eine Führungsplatte aufweist, vor deren Unterseite (18) und/oder vor deren Längsseite (25) die mindestens eine Fahrrolle (61-63) vorsteht, wobei die mindestens eine vor die Längsseite (25) vorstehende Fahrrolle (61-63) zweckmäßigerweise zum Abrollen auf einem Bereich neben der Führungsschiene (80) vorgesehen ist oder frei vor die Führungsschiene (80) vorsteht.

9. Führungseinrichtung nach einem der vorhergehenden Ansprüche, **dadurch gekennzeichnet, dass** sie eine Abdeckung, insbesondere eine Absaughaube, für das Werkzeug, insbesondere das Schneidwerkzeug (17), aufweist und/oder dass sie eine insbesondere als Klemmhalterung ausgestaltete Halterung (28) für Hand-Werkzeugmaschine, insbesondere die Motorbaugruppe der Hand-Werkzeugmaschine, aufweist, an der die Hand-Werkzeugmaschine oder die Motorbaugruppe lösbar befestigbar ist.

10. Führungseinrichtung nach einem der vorhergehenden Ansprüche, **dadurch gekennzeichnet, dass** sie ein in Arbeitsrichtung (23) dem Werkzeug (17) vorgelagertes, zweckmäßigerweise bis zur Aufstandsfläche der mindestens einen Fahrrolle vorstehendes, Luft-Leitelement (71) zur Trennung zweier Absaugluftströme (72, 73) aufweist, von denen ein Absaugluftstrom (72) unmittelbar am Werkzeug (17) gebildet wird und vom anderen Absaugluftstrom (73) zumindest nahe dem Untergrund getrennt ist.

11. Führungseinrichtung nach einem der vorhergehenden Ansprüche, **dadurch gekennzeichnet, dass** sie ein Schwenklager (12) zum schwenkbaren Lagern der Motorbaugruppe (11a; 11b) aufweist, um die Motorbaugruppe (11a; 11b) zwischen einer oberen Schwenkposition, in der die Werkzeugaufnahme von der Führungseinrichtung (14a; 14b) weggeschwenkt ist, so dass das Schneidwerkzeug (17) zweckmäßigerweise nicht vor die Unterseite (18) der Führungseinrichtung (14a; 14b) vorsteht, und einer unteren Schwenkposition zu schwenken, in der die Werkzeugaufnahme zur Einstellung einer insbesondere maximalen Schnitttiefe zu der Führungseinrichtung (14a; 14b) hin geschwenkt ist.

12. Führungseinrichtung nach Anspruch 11, **dadurch gekennzeichnet, dass** sie eine Fixiereinrichtung (31) mit einem Halteelement (47) aufweist, an dem mindestens eine Haltekontur (48, 49) zum Fixieren der Motorbaugruppe in einer unteren Schwenkposition angeordnet ist, wobei die Haltekontur (48, 49) in der unteren Schwenkposition mit einer bezüglich der Führungseinrichtung ortsfesten oder ortsfest festlegbaren Gegen-Haltekontur (45, 46) verbindbar ist und/oder dass die Motorbaugruppe (11a; 11b) in Richtung der oberen Schwenkposition durch eine Rückstellfeder (59) federbelastet ist, wobei vorteilhaft eine Längserstreckungsachse der Rückstellfeder (59) etwa oder genau rechtwinkelig zu der Schwenkachse (13) und/oder zu einer Drehachse der Werkzeugaufnahme verläuft.

13. Hand-Werkzeugmaschine (10a; 10b) mit einer mit ihrer Unterseite (18) auf einem Untergrund führbaren, insbesondere eine Führungsplatte umfassenden, Führungseinrichtung (14a; 14b) nach einem der vorhergehenden Ansprüche und einer Motorbaugruppe (11a; 11b), die einen Antriebsmotor (16) und eine durch den Antriebsmotor (16) antreibbare Werkzeugaufnahme für ein insbesondere als Schneidwerkzeug (17) ausgestaltetes Werkzeug umfasst, wobei an der Führungseinrichtung eine Rollenanordnung (60) mit mindestens einer Fahrrolle (61-63) angeordnet ist, mit der die Führungseinrichtung auf einem Untergrund verfahrbar ist.

14. System umfassend eine Hand-Werkzeugmaschine nach Anspruch 13 oder eine Führungseinrichtung nach einem der Ansprüche 1 bis 12, und eine feste oder flexible, insbesondere plattenartige, Führungsschiene (80), wobei an der Führungsschiene (80) mindestens eine die Führungseinrichtung bezüglich einer Längsrichtung der Führungsschiene (80) führende Gegen-Führungsfläche (82), insbesondere ein Führungsvorsprung (81), angeordnet ist.

## Claims

1. Guide device (14a; 14b), guidable on a base with its underside (18), for a hand-operated power tool having a motor assembly (11a; 11b) which comprises a drive motor (16) and a tool receptacle which can be driven by the drive motor (16) for a tool designed as a cutting tool (17) in particular, wherein the guide device (14a; 14b) comprises a roller assembly (60) with at least one travelling roller (61-63), by means of which the guide device (14a; 14b) can be moved on a base, wherein the guide device has two guide surfaces (67) arranged opposite one another and forming the insides of a guide groove (66a; 66b) for sliding on mating guide surfaces (82) provided by a guide rail (80), **characterised in** the that roller assembly (60) is located outside the guide groove and laterally adjacent to the guide groove (66a; 66b).

2. Guide device (14a; 14b) according to claim 1, **characterised in that** it comprises at least one guide surface (67), which extends in a longitudinal direction of the guide device and is in particular mounted in a stationary or movable manner, for guidance in the longitudinal direction and for sliding and/or rolling on a mating guide surface (82) provided by a guide rail (80).

3. Guide device according to claim 1 or 2, **characterised in that** at least one travelling roller (61-63) is located in front of and/or behind the tool in the working direction (23) and/or at right angles to the working direction (23) adjacent to the tool, in particular forming a part of a pair of travelling rollers (61-63) located on opposite sides of the tool adjacent to the tool.

4. Guide device (14a; 14b) according to any of the preceding claims, **characterised in that** it has a distance between a standing surface of the at least one travelling roller (61-63), on which the latter travels on a base in use, and a lower wall surface on the underside, so that, while the hand-operated power tool is guided on the base, the lower wall surface has a distance from the base and the guide device rolls freely on the base.

5. Guide device (14a; 14b) according to any of the preceding claims, **characterised in that** it comprises at least one pair of travelling rollers (61-63) arranged at right angles to the longitudinal direction with transverse spacing, or a pairing of one travelling roller (61-63) and an associated guide surface (67), wherein the transverse spacing advantageously corresponds to a spacing of two mating guide surfaces (82) assigned to the travelling roller pair or to the pairing of guide surface (67) and travelling roller (61-63) and laterally guiding the same.

6. Guide device (14a; 14b) according to any of the preceding claims, **characterised in that** a mutual spacing of the guide surfaces (67) or a distance between a guide surface (67) and a travelling roller (61-63) or a transverse spacing of two travelling rollers (61-63) is adjustable.

7. Guide device (14a; 14b) according to any of the preceding claims, **characterised in that** it comprises a height adjustment device for the roller assembly (60) as a whole or for at least one travelling roller (61-63) for adjusting the roller assembly (60) or the travelling roller (61-63) between a rolling position, in which the roller assembly (60) or the travelling roller (61-63) projects in front of a sliding surface on the underside of the guide device, and a sliding position, in which the roller assembly (60) or the travelling roller (61-63) is moved back behind the sliding surface.

8. Guide device (14a; 14b) according to any of the preceding claims, **characterised in that** it comprises a frame or a guide plate, from the underside (18) and/or in front of the long side (25) of which the at least one travelling roller (61-63) projects, wherein the at least one travelling roller (61-63) projecting in front of the long side (25) is expediently provided for rolling on a region adjacent to the guide rail (80) or projects freely in front of the guide rail (80).

9. Guide device according to any of the preceding claims, **characterised in that** it comprises a cover, in particular an extraction hood, for the tool, in particular the cutting tool (17), and/or **in that** it comprises a holder (28) designed as a clamp-type holder in particular for the hand-operated power tool, in particular for the motor assembly of the hand-operated power tool, on which holder (28) the hand-operated power tool or the motor assembly can be releasably secured.

10. Guide device according to any of the preceding claims, **characterised in that** it comprises an air ducting element (71) located upstream of the tool (17) in the working direction (23) and expediently projecting to the standing surface of the at least one travelling roller for separating two intake air streams (72, 73), of which one intake air stream (72) is formed directly at the tool (17) and is separated from the other intake air stream (73) at least close to the base.

11. Guide device according to any of the preceding claims, **characterised in that** it comprises a pivot bearing (12) for the pivotable mounting of the motor assembly (11a; 11b) in order to pivot the motor assembly (11a; 11b) between an upper pivoting position, in which the tool receptacle is pivoted away from the guide device (14a; 14b), so that the cutting tool (17) expediently does not project in front of the underside (18) of the guide device (14a; 14b), and a lower pivoting position, in which the tool receptacle is pivoted towards the guide device (14a; 14b) for adjusting an in particular maximum cutting depth.

12. Guide device according to claim 11, **characterised in that** it comprises a locating device (31) with a holding element (47), on which is provided at least one holding contour (48, 49) for locating the motor assembly in a lower pivoting position, wherein the holding contour (48, 49) can be connected to a mating holding contour (45, 46) which is or can be fixed in place relative to the guide device in the lower pivoting position, and/or **in that** the motor assembly (11a; 11b) is spring-loaded by a return spring (59) towards the upper pivoting position, a longitudinal axis of the return spring (59) advantageously extending approximately or precisely at right angles to the pivot axis (13) and/or to an axis of rotation of the tool receptacle.

13. Hand-operated power tool (10a; 10b), comprising a guide device (14a; 14b) according to any of the preceding claims, which can be guided on a base and includes a guide plate in particular, and a motor assembly (11a; 11b) which comprises a drive motor (16) and a tool receptacle which can be driven by the drive motor (16) for a tool designed as a cutting tool (17) in particular, wherein a roller assembly (60) with at least one travelling roller (61-63), by means of which the guide device (14a; 14b) can be moved on a base, is provided on the guide device.

14. System comprising a hand-operated power tool (10a; 10b) according to claim 13 or a guide device according to any of claims 1 to 12 and a fixed or flexible, in particular plate-like, guide rail (80), wherein at least one mating guide surface (82), in particular a guide projection (81), guiding the guide device in respect of a longitudinal direction of the guide rail (80), is provided on the guide rail (80).

## Revendications

1. Dispositif de guidage (14a ; 14b), qui peut être guidé avec sa face inférieure (18) sur un support, pour une machine-outil manuelle avec un groupe moteur (11a ; 11b), qui comprend un moteur d'entraînement (16) et un logement d'outil pouvant être entraîné par le moteur d'entraînement (16) pour un outil réalisé en particulier en tant qu'outil (17) de coupe, dans lequel le dispositif de guidage (14a; 14b) présente un agencement de rouleaux (60) avec au moins un rouleau de déplacement (61-63), avec lequel le dispositif de guidage (14a ; 14b) peut être déplacé sur un support, dans lequel le dispositif de guidage présente deux surfaces de guidage (67) opposées l'une à l'autre, formant des côtés intérieurs d'une rainure de guidage (66a ; 66b), pour le glissement sur des contre-surfaces de guidage (82) mises à disposition par un rail de guidage (80), **caractérisé en ce que** l'agencement de rouleaux (60) est agencé en dehors de la rainure de guidage et latéralement à côté de la rainure de guidage (66a ; 66b).

2. Dispositif de guidage (14a ; 14b) selon la revendication 1, **caractérisé en ce qu'**il présente au moins une surface de guidage (67) s'étendant dans une direction longitudinale du dispositif de guidage, en particulier fixe ou logée de manière mobile, pour le guidage dans la direction longitudinale et pour le glissement sur une contre-surface de guidage (82) mise à disposition par un rail de guidage (80) et/ou des rouleaux.

3. Dispositif de guidage selon la revendication 1 ou 2, **caractérisé en ce qu'**au moins un rouleau de déplacement (61-63) est agencé dans la direction de travail (23) devant et/ou derrière l'outil et/ou est agencé transversalement à la direction de travail (23) à côté de l'outil, formant en particulier une partie d'une paire de rouleaux de déplacement (62-63), qui est agencée à côté de l'outil sur des côtés opposés l'un à l'autre de l'outil.

4. Dispositif de guidage (14a ; 14b) selon l'une quelconque des revendications précédentes, **caractérisé en ce qu'**il présente une distance entre une surface d'appui de l'au moins un rouleau de déplacement (61-63), avec lequel celui-ci se déplace sur un support lors de l'utilisation, et une surface de paroi inférieure au niveau de la face inférieure, de façon à ce que lors du guidage de la machine-outil manuelle sur le support, la surface de paroi inférieure est espacée du support et le dispositif de guidage roule librement sur le support.

5. Dispositif de guidage (14a ; 14b) selon l'une quelconque des revendications précédentes, **caractérisé en ce qu'**il présente au moins une paire de rouleaux de déplacement (61-63) agencés à une distance transversale transversalement à la direction longitudinale ou un accouplement formé d'un rouleau de déplacement (61-63) et d'une surface de guidage (67) affectée à celui-ci, dans lequel la distance transversale correspond de manière avantageuse à une distance entre deux contre-surfaces de guidage (82) affectées à la paire de rouleaux de déplacement ou à l'accouplement formé de la surface de guidage (67) et du rouleau de déplacement (61-63), les guidant latéralement.

6. Dispositif de guidage (14a ; 14b) selon l'une quelconque des revendications précédentes, **caractérisé en ce qu'**une distance des surfaces de guidage (67) l'une par rapport à l'autre ou d'une surface de guidage (67) par rapport à un rouleau de déplacement (61-63) ou une distance transversale entre deux rouleaux de déplacement (62-63) est réglable.

7. Dispositif de guidage (14a ; 14b) selon l'une quelconque des revendications précédentes, **caractérisé en ce qu'**il présente un dispositif de réglage en hauteur pour l'agencement de rouleaux (60) dans son ensemble ou au moins d'un rouleau de déplacement (61-63) pour le réglage de l'agencement de rouleaux (60) ou du rouleau de déplacement (61-63) entre une position de roulement, dans laquelle l'agencement de rouleaux (60) ou le rouleau de déplacement (61-63) fait saillie d'une surface de glissement au niveau de la face inférieure du dispositif de guidage, et une position de glissement, dans laquelle l'agencement de rouleaux (60) ou le rouleau de déplacement (61-63) est réglé en arrière derrière la surface de glissement.

8. Dispositif de guidage (14a ; 14b) selon l'une quelconque des revendications précédentes, **caractérisé en ce qu'**il présente un bâti ou une plaque de guidage, de laquelle face inférieure (18) et/ou duquel côté longitudinal (25) l'au moins un rouleau de déplacement (61-63) fait saillie, dans lequel l'au moins un rouleau de déplacement (61-63) faisant saillie du côté longitudinal (25) est prévu de manière appropriée pour le roulement sur une zone à côté du rail de guidage (80) et fait librement saillie du rail de guidage (80).

9. Dispositif de guidage selon l'une quelconque des revendications précédentes, **caractérisé en ce qu'**il présente un recouvrement, en particulier un capot d'aspiration, pour l'outil, en particulier l'outil (17) de coupe, et/ou **en ce qu'**il présente une fixation (28) réalisée en particulier en tant que fixation de serrage pour la machine-outil manuelle, en particulier le groupe moteur de la machine-outil manuelle, à laquelle la machine-outil manuelle ou le groupe moteur peut être fixé de manière amovible.

10. Dispositif de guidage selon l'une quelconque des revendications précédentes, **caractérisé en ce qu'**il présente un élément de conduite d'air (71) en amont de l'outil (17) dans la direction de travail (23), faisant saillie de manière appropriée jusqu'à la surface d'appui de l'au moins un rouleau de déplacement, pour la séparation de deux courants d'air d'aspiration (72, 73), dont un courant d'air d'aspiration (72) est formé directement au niveau de l'outil (17) et est séparé de l'autre courant d'air d'aspiration (73) au moins près du support.

11. Dispositif de guidage selon l'une quelconque des revendications précédentes, **caractérisé en ce qu'**il présente un palier de pivotement (12) pour le logement pivotant du groupe moteur (11a ; 11b) afin de pivoter le groupe moteur (11a ; 11b) entre une position de pivotement supérieure, dans laquelle le logement d'outil est éloigné du dispositif de guidage (14a ; 14b) par pivotement de façon à ce que, de manière appropriée, l'outil (17) de coupe ne fasse pas saillie de la face inférieure (18) du dispositif de guidage (14a ; 14b), et une position de pivotement inférieure, dans laquelle le logement d'outil est pivoté vers le dispositif de guidage (14a ; 14b) pour le réglage d'une profondeur de coupe en particulier maximum.

12. Dispositif de guidage selon la revendication 11, **caractérisé en ce qu'**il présente un dispositif de fixation (31) avec un élément de retenue (47), au niveau duquel au moins un contour de retenue (48, 49) est agencé pour la fixation du groupe moteur dans une position de pivotement inférieure, dans lequel le contour de retenue (48, 49) peut être relié dans la position de pivotement inférieure à un contre-contour de retenue (45, 46) pouvant être fixé de manière fixe ou fixe par rapport au dispositif de guidage et/ou **en ce que** le groupe moteur (11a ; 11b) est sollicité par ressort en direction de la position de pivotement supérieure par un ressort de rappel (59), dans lequel un axe d'extension longitudinale du ressort de rappel (59) s'étend de manière avantageuse à peu près ou exactement à angle droit par rapport à l'axe de pivotement (13) et/ou par rapport à un axe de rotation du logement d'outil.

13. Machine-outil manuelle (10a ; 10b) avec un dispositif de guidage (14a ; 14b) selon l'une quelconque des revendications précédentes, qui peut être guidé avec sa face inférieure (18) sur un support, comprenant en particulier une plaque de guidage, et un groupe moteur (11 a ; 11 b), qui comprend un moteur d'entraînement (16) et un logement d'outil pouvant être entraîné par le moteur d'entraînement (16) pour un outil réalisé en particulier en tant qu'outil (17) de coupe, dans lequel un agencement de rouleaux (60) avec au moins un rouleau de déplacement (61-63) est agencé au niveau du dispositif de guidage, avec lequel le dispositif de guidage peut être déplacé sur un support.

14. Système comprenant une machine-outil manuelle selon la revendication 13 ou un dispositif de guidage selon l'une quelconque des revendications 1 à 12, et un rail de guidage (80) fixe ou flexible, en particulier de type plaque, dans lequel au moins une contre-surface de guidage(82), en particulier une saillie de guidage (81), guidant le dispositif de guidage par rapport à une direction longitudinale du rail de guidage (80) est agencée au niveau du rail de guidage (80).
